# EUROPÄISCHE PATENTSCHRIFT

(11) **EP 0 876 414 B1**
(45) Veröffentlichungstag und Bekanntmachung des Hinweises auf die Patenterteilung: **25.08.1999**
(21) Anmeldenummer: 97902199.5
(22) Anmeldetag: 22.01.1997
(51) Int. Cl.: C08F 293/00, B29D 7/00

(54) **BLOCKCOPOLYMERE**
BLOCK COPOLYMERS
COPOLYMERES SEQUENCES

(30) Priorität: 25.01.1996 DE 19602540; 04.07.1996 DE 19626838; 17.07.1996 DE 19628834
(43) Veröffentlichungstag der Anmeldung: 11.11.1998
(73) Patentinhaber: BASF AKTIENGESELLSCHAFT, 67056 Ludwigshafen (DE)
(72) Erfinder: FISCHER, Michael, D-67071 Ludwigshafen (DE); KOCH, Jürgen, D-67141 Neuhofen (DE)
(86) Internationale Anmeldenummer: EP9700279
(87) Internationale Veröffentlichungsnummer: WO9727233

(56) Entgegenhaltungen:
- US-A- 4 581 429
- US-A- 5 322 912
- US-A- 5 412 047
- US-A- 5 552 502
- MACROMOLECULES, Bd. 27, Nr. 12, 1994, Seiten 313119-3124, XP002030237 E. YOSHIDA ET AL.: "synthesis of polystyrene having an aminoxy terminal by the reactions of living polystyrene with an oxoaminium salt and with the corresponding nitroxyl radical"

## Beschreibung

Die vorliegende Erfindung betrifft Dreiblockcopolymere des Typs A-B-A oder B-A-B, erhältlich durch Umsetzung von
A) Monomeren, ausgewählt aus der Gruppe bestehend aus Styrol, α-Methylstyrol, Acrylnitril, Methacrylnitril, Methylmethacrylat und Maleinsäureanhydrid, zu Blöcken A mit einer Glasübergangstemperatur Tg von größer als 0°C
und
B) Monomeren, ausgewählt aus der Gruppe bestehend aus n-Butylacrylat und 2-Ethylhexylacrylat, zu Blöcken B mit einer Glasübergangstemperatur Tg von kleiner als 0°C
bei einer Temperatur im Bereich von 100 bis 160°C in Gegenwart von Radikalstartern und N-Oxyl-Radikalen.

Weiterhin betrifft die vorliegende Erfindung Verfahren zur Herstellung solcher Blockcopolymere, deren Verwendung zur Herstellung von transparenten oder translucenten Folien und Formkörper sowie die daraus erhältlichen transparenten oder translucenten Folien und Formkörper.

Aus der US-A 5,322,912 sind Verfahren zur Herstellung von Styrolhomopolymerisaten und Copolymerisaten mit Myrcen bekannt.

Die US-A 5,412,047 beschreibt Verfahren zur Herstellung von Homopolymerisaten aus n-Butylacrylat.

Der vorliegenden Erfindung lag daher die Aufgabe zugrunde, Blockcopolymere zur Verfügung zu stellen, die sich durch eine enge Molekulargewichtsverteilung und durch erhöhte Reißdehnung bei guten Rückstelleigenschaften auszeichnen und die zur Herstellung von transparenten oder translucenten Folien und Formkörper geeignet sind, die zudem eine erhöhte Witterungsbeständigkeit aufweisen.

Demgemäß wurden die eingangs definierten Blockcopolymere gefunden.

Weiterhin wurden Verfahren zur Herstellung solcher Blockcopolymere, deren Verwendung zur Herstellung von transparenten oder translucenten Folien und Formkörper sowie die daraus erhältlichen transparenten oder translucenten Folien und Formkörper gefunden.

Als Monomere A) werden solche eingesetzt, die Blöcke A mit einer Glasübergangstemperatur von größer als 0°C bilden, ausgewählt aus der Gruppe, bestehend aus Styrol, α-Methylstyrol, Acrylnitril, Methacrylnitril, Methylmethacrylat und Maleinsäureanhydrid, bevorzugt Styrol, Acrylnitril und Methylmethacrylat.

Die Monomeren A) werden bevorzugt in einer Menge von 10 bis 90 Gew.-% eingesetzt, insbesondere von 20 bis 80 Gew.-%.

Es können auch verschiedene Monomere A) eingesetzt werden.

Als Monomere B) werden solche eingesetzt, die Blöcke B mit einer Glasübergangstemperatur von kleiner als 0°C bilden, ausgewählt aus der Gruppe, bestehend aus n-Butylacrylat und 2-Ethylhexylacrylat, bevorzugt n-Butylacrylat.

Die Monomeren B) werden bevorzugt in einer Menge von 10 bis 90 Gew.-% eingesetzt, insbesondere von 20 bis 80 Gew.-%, wobei die Summe der Mengen der Monomeren A) und B) 100 Gew.-% ergibt.

Besonders bevorzugte Blockcopolymere sind solche, die aus Styrol oder Acrylnitril oder deren Mischungen sowie n-Butylacrylat aufgebaut sind oder aus Methylmethacrylat sowie n-Butylacrylat.

Es können auch verschiedene Monomere B) eingesetzt werden.

Die Monomeren A) bauen einen Block A auf, die Monomeren B) einen Block B; die Blockcopolymere sind Dreiblockcopolymere, sie sind vorzugsweise unvernetzt und können linear aufgebaut sein, beispielsweise A-B-A, B-A-B.

Die Blöcke A und B weisen jeweils bevorzugt ein Molekulargewicht M_{w} (Gewichtsmittel) im Bereich von 1000 bis 250 000 auf und die Blöcke A und B sind miteinander nicht verträglich.

Die Blockcopolymeren weisen bevorzugt eine Molekulargewichtsverteilung M_{w}/Mₙ (Mₙ = Zahlenmittel) von kleiner als 3, insbesondere von kleiner als 2 auf. Die einzelnen Blöcke A und B weisen ebenfalls bevorzugt eine Molekulargewichtsverteilung M_{w}/Mₙ von kleiner als 3, insbesondere von kleiner als 2 auf.

Besonders geeignet sind Dreiblockpolymere des Typs A-B-A oder B-A-B mit einer Mischung aus 65 bis 85 Gew.-%, vorzugsweise 70 bis 80 Gew.-%, Styrol und 15 bis 35 Gew.-%, vorzugsweise 20 bis 30 Gew.-%, Acrylnitril als Monomer A und 50 bis 100 Gew.-%, vorzugsweise 70 bis 100 Gew.-% n-Butylacrylat und 0 bis 50 Gew.-%, vorzugsweise 0 bis 30 Gew.-% eines oder mehrerer Monomerer aus der Gruppe Acrylnitril, olefinische Diene wie Butadien, a,β-ungesättigte Carbonsäuren wie Acrylsäure oder Methacrylsäure sowie Ester solcher Carbonsäuren insbesondere von C₁-C₁₀-Alkanolen als Monomer B, wobei das Molekulargewicht M_{w} der Blöcke A und B unabhängig voneinander jeweils 5000 bis 10 000, vorzugsweise 30 000 bis 70 000, beträgt, wie Dreiblockpolymere des Typs A-B-A mit einer Mischung aus 75 Gew.-% Styrol und 25 Gew.-% Acrylnitril als Monomer A und n-Butylacrylat als Monomer B, wobei das Molekulargewicht M_{w} der Blöcke A und B jeweils 50 000 beträgt.

Die erfindungsgemäßen Blockcopolymere werden so hergestellt, daß man die Monomeren A) und B) bei einer Temperatur im Bereich von 100 bis 160°C, vorzugsweise von 130 bis 160°C in Gegenwart von Radikalstartern und N-Oxyl-Radikalen umsetzt.

Die eingesetzten Radikalstarter sind an sich bekannt und beispielsweise in Ullmanns Encyclopädie der Technischen Chemie, 4. Auflage, Band 15, Seite 187, beschrieben. Je nach Polymerisationsmethode können wasserunlösliche oder wasserlösliche Radikalstarter eingesetzt werden. Besonders geeignet sind Peroxide wie Dibenzoylperoxid und Cumolhydroperoxid, Azoverbindungen wie Azodiisobutyronitril, Persulfate wie Kaliumperoxodisulfat, aber auch Redox-Radikalstarter. Es können auch Mischungen verschiedener Radikalstarter eingesetzt werden.

Die molare Menge an Radikalstarter kann 10⁻⁶ bis 1 mol/l, vorzugsweise 10⁻⁴ bis 10⁻¹ mol/l betragen und richtet sich in bekannter Weise nach dem gewünschten Molekulargewicht des Polymerisats.

Als N-Oxyl-Radikale können solche eingesetzt werden, wie in der US-A 5,322,912, der US-A 4,581,429 und der US-A 5,412,047 beschrieben. Bevorzugt sind 2,2,6,6-Tetramethyl-1-piperidinyloxy (TEMPO), 4-Oxo-2,2,6,6-tetramethyl-1-piperidinyloxy (4-Oxo-TEMPO), 4-Hydroxy-2,2,6,6-tetramethyl-1-piperidinyloxy, 2,2,5,5-tetramethyl-l-pyrrolidinyloxy, 3-Carboxy-2,2,5,5-tetramethyl-pyrrolidinyloxy und Di-tert.-butylnitroxid. 2,6-Diphenyl-2,6-dimethyl-1-piperidinyloxy sowie 2,5-Diphenyl-2,5-dimethyl-1-pyrrolidinyloxy können ebenfalls eingesetzt werden. Mischungen verschiedener N-Oxyl-Radikale können auch eingesetzt werden.

Das molare Verhältnis zwischen dem N-Oxyl-Radikal und dem Radikalstarter liegt vorzugsweise im Bereich von 0,5:1 bis 5:1, insbesondere von 0,8:1 bis 4:1.

Die Polymerisationsgeschwindigkeit kann in bekannter Weise durch Zugabe von organischen Säuren wie Camphersulfonsäure oder p-Toluolsulfonsäure (US-A 5,322,912) oder durch Zugabe von Dimethylsulfoxid (US-A 5,412,047) erhöht werden.

Die Reaktionsbedingungen sind unkritisch, üblicherweise arbeitet man bei Normaldruck, man kann aber auch bei Drücken bis zu 30 bar arbeiten. Die Reaktionszeiten wählt man vorzugsweise so, daß man polymerisiert, bis das gewünschte Molekulargewicht erreicht wird, beispielsweise 1 Stunde bis 6 Tage.

Vorzugsweise wird in Masse polymerisiert, man kann aber auch andere Polymerisationsverfahren wie Lösungs-, Suspensions- oder Emulsionsverfahren anwenden.

Man kann auch so vorgehen, daß man entweder die Monomere A) oder die Monomere B) mit dem Radikalstarter und dem N-Oxyl-Radikal umsetzt und so einen Block A oder B herstellt, diesen gegebenenfalls isoliert und dann die Monomere B) oder A) zugibt. Vorteilhaft bei dieser Methode ist, daß die zuerst hergestellten Blöcke ohne Aktivitätsverlust gelagert werden können. Die Polymerisation der zuerst hergestellten Blöcke mit den anderen Monomeren kann in Lösung, Masse, Emulsion oder Suspension erfolgen. Kombinierte Verfahren wie Masse/Lösung, Lösung/Fällung, Masse/Suspension oder Masse/Emulsion sind ebenfalls anwendbar. Die Blockbildung kann auch in der Schmelze erfolgen, beispielsweise durch Extrusion. Bei diesen Verfahren müssen keine weiteren Mengen an Radikalstarter oder N-Oxyl-Radikalen zugegeben werden.

Die erfindungsgemäßen Blockcopolymere können noch 0 bis 50 Gew.-%, bezogen auf die Summe der Gewichtsprozente an A) und B), an faser- oder teilchenförmigen Zusatzstoffen enthalten.

Dies können beispielsweise Glasfasern, Flammschutzmittel, Stabilisatoren und Oxidationsverzögerer, Mittel gegen Wärmezersetzung oder Zersetzung durch ultraviolettes Licht, Gleit- und Entformungsmittel, Farbstoffe und Pigmente oder Weichmacher sein.

Es können Glasfasern aus E, A oder C-Glas verwendet werden. Meist sind die Glasfasern mit einer Schlichte und einem Haftvermittler ausgerüstet. Der Durchmesser der Glasfasern liegt im allgemeinen zwischen 6 und 20 µm. Es können sowohl Endlosfasern (rovings) als auch Schnittglasfasern mit einer Länge von 1 bis 10 mm, bevorzugt von 3 bis 6 mm, eingearbeitet werden.

Pigmente und Farbstoffe sind allgemein in Mengen bis zu 6, bevorzugt von 0,5 bis 5 und insbesondere von 0,5 bis 3 Gew.-%, bezogen auf die Monomeren A) und B), enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2PbCO₃Pb(OH)₂, Lithopone, Antimonweiß und Titandioxid.

Schwarze Farbpigmente, die eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78 ff).

Selbstverständlich können zur Einstellung bestimmter Farbtöne anorganische Buntpigmente wie Chromoxidgrün oder organische Buntpigmente wie Azopigmente oder Phthalocyanine eingesetzt werden. Derartige Pigmente sind allgemein im Handel üblich.

Oxidationsverzögerer und Wärmestabilisatoren, die den Blockcopolymeren gemäß der Erfindung zugesetzt werden können, sind z.B. Halogenide von Metallen der Gruppe I des Periodensystems, z.B. Natrium-, Kalium-, Lithium-Halogenide, gegebenenfalls in Verbindung mit Kupfer-(I)-Halogeniden, z.B. Chloriden, Bromiden oder Iodiden. Die Halogenide, insbesondere die des Kupfers, können auch noch elektronenreiche p-Liganden enthalten. Als Beispiele für derartige Kupferkomplexe seien Cu-Halogenid-Komplexe mit z.B. Triphenylphosphin genannt. Weiterhin können Zinkfluorid oder Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf die Monomeren A) und B), einsetzbar.

Beispiele für UV·Stabilisatoren sind verschiedene substituierte Resorcine, Salicylate, Benzotriazole und Benzophenone, die im allgemeinen in Mengen bis zu 2 Gew.-%, bezogen auf die Monomeren A) und B) eingesetzt werden.

Gleit- und Entformungsmittel, die in der Regel in Mengen bis zu 1 Gew.-% den Blockcopolymeren zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Beispiele für Weichmacher sind Dialkylphthalate oder auch polymere Weichmacher, die mit mindestens einem der Monomeren A) oder B) homogen mischbar sein müssen. Die Weichmacher können in Mengen bis zu 50 Gew.-%, bezogen auf die Monomeren A) und B), den Mischungen zugesetzt werden.

Die Mischungen der Blockcopolymeren mit den Zusatzstoffen können nach an sich bekannten Verfahren hergestellt werden, indem man die Komponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Die erfindungsgemäßen Blockcopolymere zeichnen sich durch hohe Schlagzähigkeiten, insbesondere bei tiefen Temperaturen aus. Gleichzeitig weisen sie eine hohe Witterungs- und Alterungsbeständigkeit auf. Außerdem lassen sie sich gut einfärben und zeichnen sich zudem durch eine Transparenz/Transluzenz aus, was zu excellentem Einfärbbarkeitsverhalten führt. Weiterhin eignen sie sich als Schlagzähmodifier in thermoplastischen Formmassen.

Sie lassen sich zu Formkörpern oder Folien verarbeiten. Sie können auch beispielsweise mittels bekannter Coextrusionsverfahren in Form von Schichten (bevorzugt in Schichtdicken im Bereich von 100 µm bis 100 mm) auf Oberflächen, bevorzugt auf Thermoplaste wie Styrol-Acrylnitril-Copolymere, Acrylnitril-Butadien-Styrol-Terpolymere (ABS), ASA-Kunststoffe, Polystyrol, schlagzähes Polystyrol (HIPS), schlagzähes Polymethylmethacrylat oder PCV aufgebracht werden. Weiterhin sind Mischungen der Blockcopolymeren mit Thermoplasten wie Styrol-Acrylnitril-Copolymeren, Polymethylmethacrylat, Polystyrol, Polycarbonat, Polyphenylenether, Polyamid, schlagzähmodifiziertem Polystyrol, Acrylnitril-Butadien-Styrol-Copolymeren (ABS), Acrylnitril-Styrol-Acrylat-Copolymeren (ASA) oder deren Mischungen möglich, mittels bekannter Spritzguß- und Extrusionsverfahren. Sie können beispielsweise im Automobilsektor, Haushaltsbereich und für Freizeitartikel eingesetzt werden. So können sie z.B. zu Automobilteilen, Straßenschildern, Fensterprofilen, Lampenabdeckungen, Gartenmöbeln, Booten, Surfbrettern oder Kinderspielzeug verarbeitet werden. Die Folien sind für den Verpackungsbereich geeignet und zeichnen sich durch gute Rückstelleigenschaften aus.

## Patentansprüche

1. Dreiblockcopolymere des Typs A-B-A oder B-A-B, erhältlich durch Umsetzung von
A) Monomeren, ausgewählt aus der Gruppe bestehend aus Styrol, α-Methylstyrol, Acrylnitril, Methacrylnitril, Methylmethacrylat und Maleinsäureanhydrid, zu Blöcken A mit einer Glasübergangstemperatur Tg von größer als 0°C
und
B) Monomeren, ausgewählt aus der Gruppe bestehend aus n-Butylacrylat und 2-Ethylhexylacrylat, zu Blöcken B mit einer Glasübergangstemperatur Tg von kleiner als 0°C
bei einer Temperatur im Bereich von 100 bis 160°C in Gegenwart von Radikalstartern und N-Oxyl-Radikalen.

2. Dreiblockcopolymere nach Anspruch 1, dadurch gekennzeichnet, daß die Monomeren A) in einer Menge von 10 bis 90 Gew.-% und die Monomeren B) in einer Menge von 10 bis 90 Gew.-% eingesetzt werden.

3. Dreiblockcopolymere nach den Ansprüchen 1 bis 2, dadurch gekennzeichnet, daß als Monomere A) Styrol oder Acrylnitril oder deren Mischungen und als Monomer B) n-Butylacrylat eingesetzt werden.

4. Dreiblockcopolymere nach den Ansprüchen 1 bis 2, dadurch gekennzeichnet, daß als Monomer A) Methylmethacrylat und als Monomer B) n-Butylacrylat eingesetzt werden.

5. Verfahren zur Herstellung von Dreiblockcopolymeren gemäß den Verfahrensbedingungen von Anspruch 1.

6. Verwendung von Dreiblockcopolymeren gemäß den Ansprüchen 1 bis 4 zur Herstellung von transparenten oder translucenten Folien und Formkörpern.

7. Transparente oder translucente Folien und Formkörper, erhältlich aus Dreiblockcopolymeren gemäß den Ansprüchen 1 bis 4 als wesentliche Komponente.

## Claims

1. A triblock copolymer of type A-B-A or B-A-B obtainable by reacting
A) monomers selected from the group consisting of styrene, α-methylstyrene, acrylonitrile, methacrylonitrile, methyl methacrylate and maleic anhydride to form blocks A having a glass transition temperature Tg of more than 0°C
and
B) monomers selected from the group consisting of n-butyl acrylate and 2-ethylhexyl acrylate to form blocks B having a glass transition temperature Tg of less than 0°C
at from 100 to 160°C in the presence of free-radical initiators and N-oxyl radicals.

2. A triblock copolymer as claimed in claim 1, wherein the monomers A) are employed in an amount of from 10 to 90 % by weight and the monomers B) in an amount of from 10 to 90 % by weight.

3. A triblock copolymer as claimed in claim 1 or 2, wherein styrene or acrylonitrile or a mixture thereof is employed as monomer A) and n-butyl acrylate as monomer B).

4. A triblock copolymer as claimed in claim 1 or 2, wherein methyl methacrylate is employed as monomer A) and n-butyl acrylate as monomer B).

5. A process for preparing triblock copolymers under the conditions of claim 1.

6. The use of a triblock copolymer as claimed in any of claims 1 to 4 for producing transparent or translucent films or moldings.

7. A transparent or translucent film or molding obtainable from a triblock copolymer as claimed in any of claims 1 to 4 as principal component.

## Revendications

1. Copolymères à trois blocs du type A-B-A ou B-A-B, que l'on peut obtenir par réaction
A) de monomères choisis parmi le groupe constitué du styrène, de l'α-méthylstyrène, de l'acrylonitrile, du méthacrylonitrile, du méthacrylate de méthyle et de l'anhydride maléique, pour former des blocs A ayant une température de transition vitreuse Tg supérieure à 0°C,
et
B) de monomères choisis parmi le groupe constitué d'acrylate de n-butyle et d'acrylate de 2-éthylhexyle, pour former des blocs B ayant une température vitreuse Tg inférieure à 0°C,
à une température de l'ordre de 100 à 160°C, en présence d'amorceurs de radicaux et de radicaux N-oxyle.

2. Copolymères à trois blocs suivant la revendication 1, caractérisés en ce que les monomères A) sont mis en oeuvre en une quantité de 10 à 90% en poids et les monomères B) en une quantité de 10 à 90% en poids.

3. Copolymères à trois blocs suivant l'une des revendications 1 et 2, caractérisés en ce qu'on met en oeuvre, comme monomère A), du styrène ou de l'acrylonitrile ou leurs mélanges et, comme monomère B), de l'acrylate de n-butyle.

4. Copolymères à trois blocs suivant l'une des revendications 1 et 2, caractérisés en ce qu'on met en oeuvre, comme monomère A), du méthacrylate de méthyle et, comme monomère B), de l'acrylate de n-butyle.

5. Procédé de préparation de copolymères à trois blocs suivant les conditions opératoires de la revendication 1.

6. Utilisation de copolymères à trois blocs suivant l'une des revendications 1 à 4, pour la fabrication de feuilles et corps façonnés transparents ou translucides.

7. Feuilles ou corps façonnés transparents ou translucides, que l'on peut obtenir à partir des copolymères à trois blocs suivant l'une des revendications 1 à 4, comme composant essentiel.
